(19) **Europäisches Patentamt**
**European Patent Office**
**Office européen des brevets**

(11) **EP 1 997 092 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(21) Anmeldenummer: **07704534.2**

(22) Anmeldetag: **12.02.2007**

(51) Int Cl.:
*G08G 1/16* (2006.01)          *B60K 31/00* (2006.01)
*B60R 21/013* (2006.01)

(86) Internationale Anmeldenummer:
**PCT/EP2007/051358**

(87) Internationale Veröffentlichungsnummer:
**WO 2007/104625 (20.09.2007 Gazette 2007/38)**

(54) **VERFAHREN UND VORRICHTUNG ZUM UNTERSTÜTZEN EINES FÜHRENS EINES FAHRZEUGS**

METHOD AND APPARATUS FOR ASSISTING DRIVING OF A VEHICLE

PROCÉDÉ ET DISPOSITIF D'ASSISTANCE DE CONDUITE D'UN VÉHICULE

(84) Benannte Vertragsstaaten:
**DE ES FR GB IT**

(30) Priorität: **13.03.2006 DE 102006011481**

(43) Veröffentlichungstag der Anmeldung:
**03.12.2008 Patentblatt 2008/49**

(73) Patentinhaber: **Robert Bosch GmbH**
**70442 Stuttgart (DE)**

(72) Erfinder:
• **KOCH-GROEBER, Hermann**
**70469 Stuttgart (DE)**

• **UHLER, Werner**
**76646 Bruchsal (DE)**
• **ARNON, Marc**
**71229 Leonberg (DE)**
• **JAEGER, Danny**
**70469 Stuttgart (DE)**

(56) Entgegenhaltungen:
EP-A- 1 407 931          EP-A- 1 531 082
EP-A1- 1 557 784          DE-A1- 19 839 198
DE-A1-102004 009 924     FR-A- 2 864 311
US-A1- 2005 273 263

**Beschreibung**

Stand der Technik

Die Erfindung betrifft ein Verfahren zum Unterstützen eines Führens eines Fahrzeugs, insbesondere eines Kraftfahrzeugs, mit einer Erfassungseinrichtung zur Umfelderfassung zumindest eines Teilbereichs eines Umfelds des Fahrzeugs, mit einer Ausgabeeinrichtung zum Ausgeben einer aus der Umfelderfassung gewonnenen Fahrzeugumfeldinformation an einen Fahrzeugführer und mit einer Auswerteeinrichtung zum Bestimmen einer Gefährdungshöhe aus der Fahrzeugumfeldinformation. Außerdem betrifft die Erfindung eine Vorrichtung für ein Fahrzeug, insbesondere ein Kraftfahrzeug, zur Durchführung eines vorgenannten Verfahrens mit einer Erfassungseinrichtung zur Umfelderfassung zumindest eines Teilbereichs eines Umfelds des Fahrzeugs, mit einer Ausgabeeinrichtung zum Ausgeben einer aus der Umfelderfassung gewonnenen Fahrzeugumfeldinformation an einen Fahrzeugführer und mit einer Auswerteeinrichtung zum Bestimmen einer Gefährdungshöhe aus der Fahrzeugumfeldinformation.

Ein eingangs genanntes Verfahren und eine eingangs genannte Vorrichtung sind aus DE 102 47 563 A1 als Verfahren und System zur Unterstützung eines Fahrers eines Fahrzeugs mit einer Kamera zur Erfassung zumindest eines Teils eines Umfelds des Fahrzeugs und mit einer Anzeigeeinrichtung zur Anzeige des von der Kamera erfassten Umfelds bekannt. Dabei sollen mittels einer Datenverarbeitungsanlage von der Kamera erfasste Gefährdungsobjekte, welche eine mögliche Gefährdung des Fahrzeugs darstellen, auf der Anzeigeeinrichtung augenfälliger dargestellt werden als Objekte, welche keine Gefährdung darstellen.

Aus der DE 10 2004 009924 A1 ist ein Verfahren und eine Warnvorrichtung zum graphischen Aufbereiten eines Bildes einer Kamera bekannt. Hierbei ist es bekannt, ein durch ein in der Umgebung vorhandenes Hindernis realisiertes Gefahrenpotenzial für ein Kraftfahrzeug für den Fahrer optisch visualisiert darzustellen. Hierbei ist es bekannt, drei Raumbereiche vor der Kameraeinrichtung des Fahrzeugs zu definieren. Für jeden Raumbereich wird ein Balken dargestellt, der jeweils den Abstand von der Abstandsmesseinrichtung des Fahrzeugs zu dem Hindernis in dem jeweiligen Raumbereich darstellt.

Aus der EP 1557784 A1 ist ein Verfahren und eine Vorrichtung zum Assistieren beim Führen eines Kraftfahrzeugs durch eine Fahrspurerkennung bekannt. Zur Bestimmung der Güte, d.h. der Aussagesicherheit der Fahrspurerkennung, wird überprüft, wie viele Suchfenster zum Feststellen des Fahrspurverlaufs betrachtet werden müssen.

Aus der FR 2864311 A1 ist ein Anzeigesystem für ein Fahrzeug bekannt, bei dem eine Einblendung eines virtuellen Bildes vor einem Fahrer erfolgt. So wird beispielsweise ein Verkehrszeichen eingeblendet.

Aus der US 2005/0273263 A1 ist ein Warnsystem für einen Fahrer bekannt, bei dem in einer gefährlichen Fahrsituation eine haptische Warnung über eine Sitzvibration an den Fahrer ausgegeben wird.

Weiterhin offenbart DE 198 39 198 A1 ein Verfahren zum Anzeigen von Fahrerinformationen in einem Kraftfahrzeug, wobei ein optisches Hinweissignal in eine Frontscheibe und/oder einen Rückspiegel des Kraftfahrzeugs eingeblendet werden soll, wenn ein vorbestimmter Fahrzeugzustand und/oder Verkehrszustand von einer Erfassungseinrichtung zum Erfassen von Fahrzeugzuständen und/oder Verkehrszuständen erfasst worden ist. Das optische Hinweissignal enthält einen Richtungshinweis darüber, in welche Richtung ein Fahrer seine Aufmerksamkeit lenken soll.

Der Erfindung liegt die Aufgabe zugrunde, ein Verfahren der eingangs genannten Art anzugeben, welches dem Fahrzeugführer das Führen des Fahrzeugs weiter erleichtert. Darüber hinaus liegt der Erfindung die Aufgabe zugrunde, eine Vorrichtung zur Durchführung eines derartigen Verfahrens zu liefern.

Die erstgenannte Aufgabe wird erfindungsgemäß gelöst mit einem Verfahren der eingangs genannten Art, wobei zumindest ein zum Bestimmen der Gefährdungshöhe vorgesehener Teil der Fahrzeugumfeldinformation und die von der Auswerteeinrichtung bestimmte Gefährdungshöhe während eines Betriebs des Fahrzeugs von der Ausgabeeinrichtung kontinuierlich an den Fahrzeugführer ausgegeben werden.

Die oben zweitgenannte Aufgabe wird erfindungsgemäß gelöst mit einer Vorrichtung der eingangs genannten Art, bei der die Ausgabeeinrichtung derart ansteuerbar ist, dass zumindest ein zum Bestimmen der Gefährdungshöhe vorgesehener Teil der Fahrzeugumfeldinformation und die Gefährdungshöhe von der Ausgabeeinrichtung kontinuierlich an den Fahrzeugführer ausgebbar sind.

Vorteile der Erfindung

Von wesentlichem Vorteil bei der Erfindung ist, dass der Fahrzeugführer kontinuierlich, also permanent, über zumindest einen wesentlichen Ausschnitt des Umfelds des Fahrzeugs, zum Beispiel eine vor dem Fahrzeug liegende, von dem Fahrzeug zu befahrende Fahrbahn einschließlich Fahrbahnrandbereichen, insbesondere Randstreifen, eine Information erhält. Diese Information kann zum Beispiel Hinweise auf Fremdobjekte oder beispielsweise auch Angaben über den Fahrbahnzustand enthalten. Wichtig ist, dass die Fahrzeugumfeldinformation nicht bezüglich eines spezifischen Objekts, zum Beispiel eines konkreten auf der Fahrbahn stehenden Kraftfahrzeugs, individualisiert ist, sondern dass die Information beispielsweise ein Vorhandensein irgendeines möglicherweise eine Kollisionsgefahr bedeutenden Objekts im Umfeld des Fahrzeugs im Allgemeinen beinhaltet. Entsprechend gibt die Gefährdungshöhe auch nicht zum Beispiel eine Wahrscheinlichkeit einer bevorstehenden Kollision mit einem bestimmten Objekt, beispielsweise dem oben genannten auf der Fahrbahn stehenden Kraftfahrzeug, an, sondern die Gefährdungshöhe ist - bezogen auf den Beispielfall einer möglichen Kollisionsgefahr - ein Maß für die Gefahr, dass überhaupt eine Kollision mit irgendeinem Objekt im Umfeld des Fahrzeugs erfolgt. Beispielsweise kann die Gefährdungshöhe allgemein ein Risiko für das Fahrzeug angeben und von der Auswerteeinrichtung in der Weise bestimmt werden, dass sich die Gefährdungshöhe als Produkt aus einer möglichen Schadenshöhe und einer Wahrscheinlichkeit eines Eintritts des der Schadenshöhe zugrundeliegenden Schadens ergibt. Die Ansteuerung der Ausgabeeinrichtung zur kontinuierlichen Ausgabe von Fahrzeugumfeldinformation und Gefährdungshöhe erfolgt vorzugsweise mittels der Auswerteeinrichtung oder mittels einer separaten Ansteuereinheit. Durch die kontinuierliche, und zwar insbesondere stetig veränderbare, stufenlose, das heißt analoge, Ausgabe der Fahrzeugumfeldinformation und der mit dieser korrespondierenden Gefährdungshöhe wird der Fahrzeugführer ständig über das Umfeld des Fahrzeugs auf dem Laufenden gehalten, er muss nicht - wie es bei aus dem Stand der Technik bekannten Verfahren der Fall ist - plötzlich reagieren, weil überraschend und unerwartet ein Warnsignal bei Überschreiten einer bestimmten Gefährdungsstufe ausgegeben wird. Demgegenüber kann der Fahrzeugführer mit dem erfindungsgemäßen Verfahren und der erfindungsgemäßen Vorrichtung vorteilhaft eine sich vergrößernde und/oder verkleinernde Gefahr ständig wahrnehmen und somit frühzeitig, überlegt und unüberrascht reagieren. Mit der Erfindung wird der Fahrzeugführer sehr vorteilhaft in einem äußerst situationsangepassten Führen des Fahrzeugs wesentlich unterstützt. Dadurch kann die Verkehrssicherheit, insbesondere bei Nachtfahrten bei Einsatz von zum Beispiel abstandsmessenden Sensoren wie Ultraschall- oder Radarsensoren in der Erfassungseinrichtung zum Erfassen von Objekten im Umfeld des Fahrzeugs, mit der Erfindung erheblich erhöht werden. Grundsätzlich ist die Erfindung für Fahrzeuge jeglicher Art geeignet; aufgrund der hohen Kraftverkehrsdichte ist es aber besonders vorteilhaft, wenn das Fahrzeug ein Kraftfahrzeug, vorzugsweise ein Personenkraftwagen oder ein Nutzkraftwagen, ist. Bei dem Fahrzeugführer handelt es sich dann um den Fahrer des Kraftfahrzeugs. Mit der Erfindung, die keine scharf abgegrenzten Warnstufen aufweist, kann vorteilhaft insbesondere eine Verbesserung einer Mensch-Maschine-Schnittstelle von Fahrerassistenzsystemen zur Kollisionswarnung erfolgen. Von großem Vorteil ist es, dass mit der Erfindung die Möglichkeit von Fehlwarnungen des Fahrzeugführers erheblich reduziert und auf diese Weise ein Vertrauensverlust des Fahrzeugführers gegenüber der zu seiner Unterstützung vorgesehenen Vorrichtung vermieden wird; dennoch erfolgt mit der Erfindung eine vorteilhaft frühe Information und insbesondere Warnung des Fahrzeugführers. Mit der Erfindung ist dem Fahrzeugführer eine weitestgehend objektive Gefahr für das Fahrzeug kontinuierlich übermittelbar; durch die kontinuierliche Übermittlung kann der Fahrzeugführer einem Lernprozess unterzogen werden, so dass der Fahrzeugführer nach einiger Zeit in die Lage versetzt werden kann, die übermittelte objektive Gefahr mit seinem subjektiven Empfinden in Übereinstimmung zu bringen. Auf diese Weise unterstützt die Erfindung ein fahrzeugführerindividuelles Führen des Fahrzeugs. Nach einer Eingewöhnungsphase kann sich der Fahrzeugführer mit der Erfindung intuitiv einen Eindruck von einer Gefährlichkeit einer aktuellen Fahrsituation machen, auch wenn er potentiell kollisionsgefährdende Objekte - zum Beispiel nachts - noch nicht selbst erkennen kann.

Erfindungsgemäß wird von der Auswerteeinrichtung eine Aussagesicherheit der Gefährdungshöhe bestimmt, und die Aussagesicherheit wird während eines Betriebs des Fahrzeugs von der Ausgabeeinrichtung kontinuierlich an den Fahrzeugführer ausgegeben. Damit kann vorteilhaft berücksichtigt werden, dass zum Beispiel Sensoren der Erfassungseinrichtung eine Detektionsungenauigkeit aufweisen und/oder dass beispielsweise ein Bestimmen der Gefährdungshöhe lediglich anhand von Näherungsmodellen erfolgt; daraus resultiert ein möglicher Fehler bei der Angabe der Gefährdungshöhe, welcher mögliche Fehler dem Fahrzeugführer als Aussagesicherheit mitgeteilt wird und so von dem Fahrzeugführer in seine Beurteilung einer Fahrsituation einbezogen werden kann.

Man könnte sich vorstellen, Ausgaben an den Fahrzeugführer akustisch, zum Beispiel mittels eines Lautsprechers, und/oder haptisch, beispielsweise mittels einer mit einem Fahrzeugsitz oder einem Fahrzeuglenkrad verbundenen Vibrationsvorrichtung vorzunehmen. Besonders vorteilhaft für eine zuverlässige, den Fahrzeugführer aber nicht möglicherweise anstrengende Ausgabe ist es hingegen, wenn die Fahrzeugumfeldinformation und/oder die Gefährdungshöhe und/oder die Aussagesicherheit von der Ausgabeeinrichtung visuell ausgegeben werden.

Von Vorteil für eine sehr leichte Erfassbarkeit und Einschätzung der Gefährdungshöhe für den Fahrzeugführer ist es, wenn die Gefährdungshöhe mittels einer farbvariablen Farbdarstellung ausgegeben wird und wenn eine Farbe der Farbdarstellung ein Maß für die Gefährdungshöhe ist. Zum Beispiel kann für eine geringe Gefährdungshöhe die Farbe Grün gewählt werden, wobei die Darstellung mit steigender Gefährdungshöhe beispielsweise fließend in die Farbe Rot übergehen kann.

Vorteilhaft kann der Fahrzeugführer eine Höhe der Aussagesicherheit sehr gut erkennen, wenn gemäß einer anderen vorteilhaften Weiterbildung der Erfindung die Aussagesicherheit mittels einer längenvariablen Balkendarstellung ausgegeben wird und wenn eine Länge der Balkendarstellung ein Maß für die Aussagesicherheit ist.

Besonders vorteilhaft kann die Aufmerksamkeit des Fahrzeugführers sensibilisiert werden, wenn die Gefährdungshöhe mittels einer blinkenden Darstellung ausgegeben wird und wenn eine Blinkfrequenz und/oder einer Aufbaugeschwindigkeit der Darstellung ein Maß für die Gefährdungshöhe ist.

Einer anderen vorteilhaften Weiterbildung der Erfindung entsprechend wird die Aussagesicherheit mittels einer lichtstärkevariablen Darstellung ausgegeben, und eine Lichtstärke der Darstellung ist ein Maß für die Aussagesicherheit. Damit kann der Fahrzeugführer kontinuierlich und ohne die Gefahr einer plötzlichen Ablenkung vom Verkehrsgeschehen über die Aussagesicherheit informiert werden.

In einfacher Weise kann der Fahrzeugführer mit zusätzlichen Informationen, und zwar über einen Ort einer potentiellen Gefahr für das Fahrzeug, versorgt werden, wenn zumindest ein Teil der Fahrzeugumfeldinformation von der Ausgabeeinrichtung auf einer Anzeigevorrichtung an einer mit dem Ort einer möglichen Gefährdung in dem Umfeld des Fahrzeugs korrespondierenden Stelle der Anzeigevorrichtung ausgegeben wird.

Ferner ist es vorteilhaft, neben Gefährdungen in der Fahrzeugumgebung für die Angabe einer Gefährdungshöhe auch Gefährdungen zu berücksichtigen, die von dem

Fahrzeugzustand und/oder dem Fahrzustand des Fahrzeugs ausgehen. So kann bei Schäden am Fahrzeug, wie z.B. ein abfallender Reifendruck oder einer defekten Lampe sowie hoher Geschwindigkeit ohne Berücksichtigung der Fahrzeugumgebung bereits von dem Betrieb des Fahrzeugs selbst eine erhebliche Gefährdung ausgehen, selbst wenn aus dem Umfeld alleine keine Gefährdung für das Fahrzeug zu erkennen ist. Vorteilhaft wird daher auch das durch den Fahrzeugzustand bzw. den Fahrzustand sich ergebende Gefährdungspotential für die Angabe einer Gefährdung berücksichtigt. Hierzu ist die Auswerteeinheit zur Bestimmung einer Gefährdung vorteilhaft mit Fahrzeugsensoren verbunden, die Informationen über den Fahrzeugzustand bzw. den Fahrzustand des Fahrzeugs an die Auswerteeinheit übermitteln.

Die erfindungsgemäße Vorrichtung kann vorteilhaft besonders einfach und kostengünstig aufgebaut sein, wenn gemäß einer anderen Weiterbildung der Erfindung die Ausgabeeinrichtung einen Bildschirm aufweist.

Eine sehr gut ablesbare und betriebssichere Anzeige kann die erfindungsgemäße Vorrichtung aufweisen, wenn die Ausgabeeinrichtung vorteilhaft eine Leuchtmittelkette aufweist. Vorzugsweise sind Leuchtmittel der Leuchtmittelkette lichtemittierende Dioden (LEDs), bei denen es sich auch um Mehrfarb-LEDs handeln kann. Die Leuchtmittelkette ist somit bevorzugt eine eine hohe Dauerhaltbarkeit aufweisende und sich durch einen niedrigen Bedarf an elektrischer Energie zu ihrem Betrieb auszeichnende LED-Kette.

Die erfindungsgemäße Vorrichtung kann den Fahrzeugführer vorteilhaft beim Führen des Fahrzeugs noch weitergehend unterstützen, wenn von der Auswerteeinrichtung eine Aussagesicherheit der Gefährdungshöhe bestimmbar ist und wenn die Ausgabeeinrichtung derart ansteuerbar ist, dass die Aussagesicherheit von der Ausgabeeinrichtung kontinuierlich an den Fahrzeugführer ausgebbar ist.

Zeichnung

Ausführungsbeispiele der Erfindung sind in der Zeichnung schematisiert dargestellt und werden nachfolgend näher beschrieben. Es zeigen

Figur 1 — ein Ablaufdiagramm eines Verfahrens zum Unterstützen eines Führers eines Fahrzeugs,

Figur 2 — eine Armaturentafel eines Kraftfahrzeugs mit einer Anzeigevorrichtung,

Figur 3 — eine andere Armaturentafel eines Kraftfahrzeugs mit einer Anzeigevorrichtung,

Figur 4 — eine weitere Armaturentafel eines Kraftfahrzeugs mit einer Anzeigevorrichtung,

Figur 5 — ein Fahrzeug mit einer Vorrichtung zum Unterstützen eines Führers des Fahrzeugs und

Figuren 6 bis 9 — eine weitere Anzeigevorrichtung eines Kraftfahrzeugs.

Beschreibung der Ausführungsbeispiele

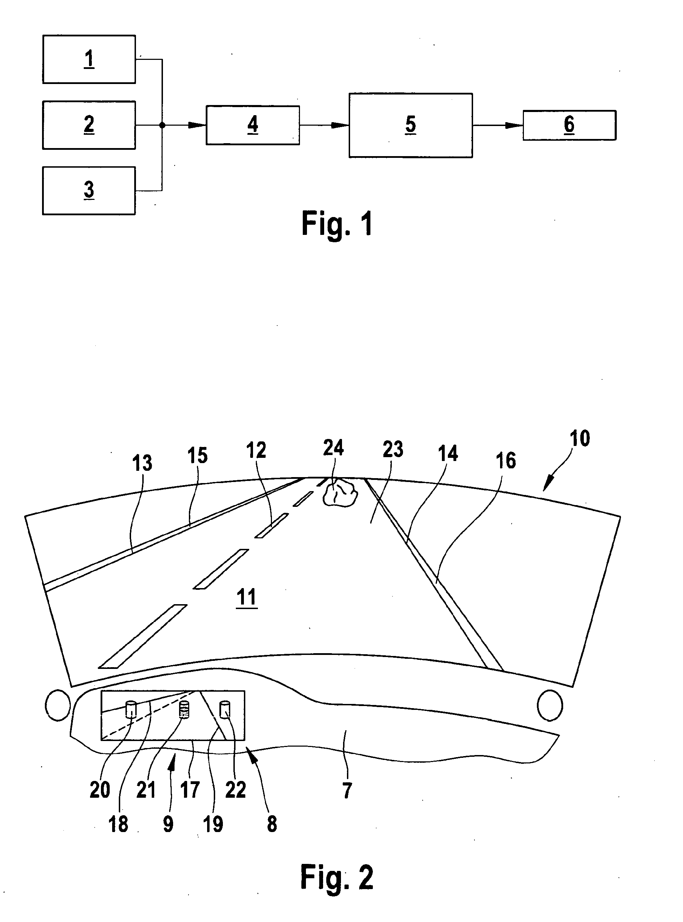

Figur 1 zeigt beispielhaft ein Ablaufdiagramm für ein Verfahren zum Unterstützen eines Führers eines Fahrzeugs, und zwar in diesem Beispiel eines Kraftfahrzeugs. In einem ersten Schritt wird, symbolisiert durch jeweils einen Block 1, 2, 3, von drei Sensoren einer Erfassungseinrichtung zur Umfelderfassung zumindest eines Teilbereichs eines Umfelds des Fahrzeugs eine Position eines eine mögliche Kollisionsgefahr für das Fahrzeug bedeutenden Objekts im Umfeld des Fahrzeugs erfasst. Auf gleiche Weise können auch Informationen von Fahrzeugsensoren, die den Fahrzeugzustand und/oder den Fahrzustand des Fahrzeugs überwachen, zur Auswertung erfasst werden. In einem nächsten Schritt, symbolisiert durch einen nachfolgenden Block 4, erfolgt in einer Auswerteeinrichtung eine Sensordatenfusion von von den drei Sensoren gelieferten Sensordaten, und es wird ausgehend von den Sensordaten eine Fahrzeugumfeldinformation für einen Fahrzeugführer erstellt. Weiterhin wird in einem dritten, durch einen weiteren Block 5 symbolisierten Schritt mittels der Auswerteeinrichtung eine Gefährdungshöhe, das heißt eine Höhe einer potentiellen Gefährdung des Fahrzeugs, bestimmt. Dazu ermittelt die Auswerteeinrichtung eine Gefährlichkeit eines Straßenraums in einem Umfeld des Fahrzeugs.

Nachfolgend werden in einem vierten, durch ebenfalls einen Block 6 symbolisierten Schritt zumindest ein zum Bestimmen der Gefährdungshöhe vorgesehener Teil der Fahrzeugumfeldinformation, zum Beispiel ein Abstand zu einem dem Kraftfahrzeug vorausfahrenden Fahrzeug, und die von der Auswerteeinrichtung bestimmte Gefährdungshöhe von einer Ausgabeeinrichtung während eines Betriebs des Fahrzeugs kontinuierlich an den Fahrzeugführer ausgegeben; dieses kontinuierliche Ausgeben bedeutet vorteilhaft einerseits eine ständig präsente und andererseits eine stufenlose Ausgabe insbesondere der Gefährdungshöhe. Die Ausgabeeinrichtung ist allgemein eine Mensch-Maschine-Schnittstelle (HMI), und zwar in diesem Fall zwischen Kraftfahrzeug und Fahrer. Die Ausgabe an den Fahrer erfolgt während eines Betriebs des Fahrzeugs, das heißt zum Beispiel dann, wenn ein Antriebsmotor des Kraftfahrzeugs gestartet ist oder wenn das Kraftfahrzeug in Bewegung ist, also fährt.

Die Gefährdungshöhe kann zum Beispiel mittels einer farbvariablen Farbdarstellung, wobei eine Farbe der Farbdarstellung ein Maß für die Gefährdungshöhe - beispielsweise grün/gelb für eine geringe Gefährdung und rot für eine hohe Gefährdung - ist, oder zum Beispiel mittels einer grauwertveränderlichen Graustufendarstellung, wobei ein Grauwert der Graustufendarstellung ein Maß für die Gefährdungshöhe - beispielsweise dunkel für eine geringe Gefährdung und hell für eine hohe Gefährdung - ist, ausgegeben werden.

Beispielhaft bezogen auf das oben genannte, von der Erfassungseinrichtung erfasste Objekt kann die Gefährdungshöhe von verschiedenen Größen abhängig sein. Eine dieser Größen kann zum Beispiel eine zu einer Kollisionsvermeidung erforderliche Verzögerung $a_{erf}$ des Kraftfahrzeugs sein, die ein Fahrer des kollisionsgefährdeten Kraftfahrzeugs aufbringen muss, um eine Relativgeschwindigkeit $v_{rel}$ zu dem detektierten Objekt innerhalb eines für die Verzögerung zur Verfügung stehenden Abstands d zu dem Objekt auf Null zu reduzieren. Die Verzögerung $a_{erf}$ kann beispielsweise wie folgt berechnet werden:

$$a_{erf} = -\frac{v_{rel}^2}{2 \cdot d}.$$

Ein korrespondierender, ausgegebener Grauwert GW, der ein Maß für die Gefährdungshöhe ist, kann sich dann beispielhaft als Funktion f aus der berechneten Verzögerung $a_{erf}$ sowie gegebenenfalls weiteren Objektattributen $b_i$ ergeben, so dass gilt:

$$GW = f(a_{erf}, b_i).$$

Die möglichen weiteren Objektattribute $b_i$ können zum Beispiel eine Gewichtung aus einer Klassifikation des detektierten Objekts umfassen. An die Stelle des Grauwerts GW könnte bei einer farbvariablen Darstellung auch eine Farbe treten.

Die Funktion f und somit der Grauwert GW oder die Farbe kann beispielsweise zu der Verzögerung $a_{erf}$ oder zu einem Gewichtungsfaktor b der weiteren Objektattribute $b_i$ proportional sein, so dass sich zum Beispiel der Grauwert erhöht, wenn die Verzögerung $a_{erf}$ steigt, also eine geringere negative Verzögerung zur Kollisionsvermeidung erforderlich ist.

Eine Aussagesicherheit der Gefährdungshöhe kann zum Beispiel mittels einer Transparenz T der Darstellung der Gefährdungshöhe an den Fahrer ausgegeben werden, wobei die Transparenz T beispielsweise abhängig ist von einer Detektionssicherheit $D_{plaus}$ sowie gegebenenfalls zum Beispiel einem Gewichtungsfaktor c für das erfasste Objekt. Es gilt zum Beispiel allgemein für die Transparenz T als Funktion g der Zusammenhang

$$T = g(D_{plaus}, c).$$

Dabei kann die Detektionssicherheit $D_{plaus}$ zum Beispiel einen Wert zwischen 0 und 1 annehmen, der einer Detektionshäufigkeit des Objekts entspricht und somit eine Aussage darüber macht, wie oft das Objekt in vergangenen Messzyklen von der Erfassungseinrichtung tatsächlich erfasst worden ist; beispielsweise kann die theoretische untere Grenze $D_{plaus} = 0$ angeben, dass das Objekt in einer bestimmten Anzahl von Messzyklen überhaupt nicht erfasst worden ist, und die obere Grenze $D_{plaus} = 1$ kann zum Beispiel angeben, dass das Objekt in jedem Messzyklus der Anzahl von Messzyklen erfasst worden ist. Der Gewichtungsfaktor c kann zum Beispiel eine Gewichtung einer Spurzuordnung umfassen, das heißt wenn das erfasste Objekt von der Auswerteeinrichtung einer bestimmten Spur einer Fahrbahn zugeordnet wurde, wird die Spurzuordnung mit einer entsprechenden Gewichtung versehen. Die Funktion g und somit die Transparenz T kann beispielsweise zu der Detektionssicherheit $D_{plaus}$ umgekehrt proportional sein, so dass sich zum Beispiel die Transparenz T im Sinne einer erhöhten Aussagesicherheit verringert, wenn die Detektionssicherheit $D_{plaus}$ steigt.

Anhand von Figuren 2 bis 5 werden ein Verfahren und eine Vorrichtung zum Unterstützen eines Führens eines Fahrzeugs beschrieben, die - wie auch das Verfahren nach Figur 1 - eine kontinuierliche, analoge Fahrerwarnung umfassen. In Figur 2 ist eine Armaturentafel 7 eines Kraftfahrzeugs mit einer Ausgabeeinrichtung 9 dargestellt, wobei die Ausgabeeinrichtung 9 als einen Bildschirm 17 aufweisende Anzeigevorrichtung 8 ausgebildet ist und eine Mensch-Maschine-Schnittstelle einer Vorrichtung, die in diesem Ausführungsbeispiel Bestandteil eines Fahrerassistenzsystems (FAS) zur Kollisionswarnung ist, zur Durchführung eines Verfahrens zum Unterstützen eines Führens des Kraftfahrzeugs darstellt. Außerdem ist ein Blick durch eine Frontscheibe 10 des Kraftfahrzeugs auf eine vor dem Kraftfahrzeug liegende, von diesem zu befahrende Fahrbahn 11 mit einem Mittelstreifen 12 und Fahrbahnrändern 13, 14, die die Fahrbahn 11 von Randstreifen 15, 16 trennen, gezeigt.

In diesem Ausführungsbeispiel ist die Anzeigevorrichtung 8 als so genanntes Head-Down-Display (HDD) ausgeführt, das heißt die Anzeigevorrichtung 8 ist in einem unteren Sichtbereich eines Fahrers des Kraftfahrzeugs angeordnet; es ist aber auch denkbar, die Anzeigevorrichtung zum Beispiel als Head-Up-Display (HUD), bei welchem Ausgaben an den Fahrer beispielsweise in die Frontscheibe eingespiegelt werden, auszuführen.

Auf dem Bildschirm 17 der Anzeigevorrichtung 8 ist die durch die Frontscheibe 10 zu erblickende Fahrbahn perspektivisch mit entsprechenden Fahrbahnrändern 18, 19 abgebildet. Außerdem sind auf dem Bildschirm 17 drei Zylinder 20 bis 22 an lateral konstanten, festliegenden Positionen dargestellt. Diese Zylinder 20 bis 22 sind jeweils bis zu einer bestimmten Höhe gefüllt, wobei sich die Füllhöhe nach der aktuellen Aussagesicherheit, die man auch als Detektionssicherheit bezeichnen kann, der Vorrichtung bezüglich einer Gefährdungshöhe richtet. Eine Farbe der Füllung der Zylinder 20 bis 22 entspricht einer von der Vorrichtung ermitteltenen Gefährdungshöhe des Kraftfahrzeugs für einen momentanen, auf der Anzeigevorrichtung 8 dargestellten Fahrbahnbereich.

In einer in Figur 2 dargestellten beispielhaften Fahrsituation wird von der Vorrichtung lediglich ein Objekt 24 in der eigenen Fahrspur 23, die einer rechten Fahrspur 23 der Fahrbahn 11 entspricht, detektiert. Dieses Objekt 24, das beispielhaft als Felsbrocken dargestellt ist, steht auf der eigenen Fahrspur 23. Dadurch ergibt sich aus einer von einer Auswerteeinrichtung der Vorrichtung vorgenommenen so genannten Time-To-Collision(TTC)-Betrachtung eine hohe Gefährlichkeit für das Kraftfahrzeug.

Der mittlere Zylinder 21 der drei Zylinder 20 bis 22 auf dem Bildschirm 17 ist daher beispielhaft mit roter Farbe gefüllt. Da sich die Vorrichtung zum aktuellen Zeitpunkt über die tatsächliche Existenz des detektierten Objekts 24 auf der Fahrbahn 11 jedoch nur zu einem gewissen Grad, zum Beispiel einem gewissen Prozentsatz, sicher ist, was beispielsweise aufgrund von Messaussetzern einer der Vorrichtung zugehörigen Erfassungseinrichtung zur Umfelderfassung des Kraftfahrzeugs der Fall sei kann, wird der mittlere Zylinder 21 nicht komplett mit der roten Farbe gefüllt. Diese Aussagesicherheit der Vorrichtung spiegelt sich somit in dem Füllungsgrad des mittleren Zylinders 21 wieder. Eine Gefährdungshöhe für das Kraftfahrzeug, die man auch als Situationsgefährlichkeit bezeichnen kann, kann beispielsweise durch einen stetigen Übergang der Farbe der Füllung des mittleren Zylinders 21 von grün über gelb nach rot dargestellt werden.

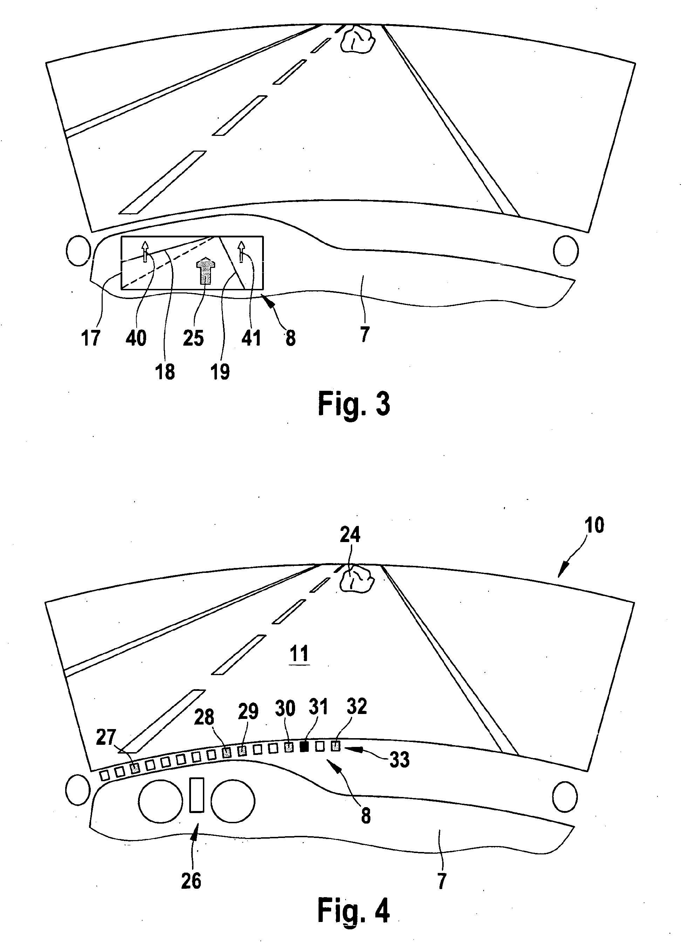

Ein weiteres Ausführungsbeispiel mit einer anderen Armaturentafel 7 mit einer Anzeigevorrichtung 8 eines Kraftfahrzeugs ist in Figur 3 gezeigt. Auf einem Bildschirm 17 der Anzeigevorrichtung 8 ist eine vor dem Kraftfahrzeug liegende Fahrbahn mit Fahrbahnrändern 18, 19 dargestellt. Anstelle der Zylinder nach Figur 2 sind hier ein mittlerer Pfeil 25 und zwei seitliche Pfeile 40, 41 zur Darstellung einer Fahrzeugumfeldinformation vorgesehen. Zur Übermittlung einer aktuellen Gefährdungshöhe an den Fahrer wird in diesem Ausführungsbeispiel entgegen der nach Figur 2 verwendeten Farbdarstellung ein Blinken des mittleren Pfeils 25, und zwar im Einzelnen eine Aufbaugeschwindigkeit, die auch als Bewegungsgeschwindigkeit bezeichnet werden kann, des Pfeils 25, die zu dem Blinken führt, verwendet. Die Aussagesicherheit oder Detektionssicherheit kann beispielsweise durch eine veränderliche Lichtstärke der Darstellung des mittleren Pfeils 25 angegeben werden.

Figur 4 zeigt ein zusätzliches Ausführungsbeispiel mit einer weiteren Armaturentafel 7, die hier zudem ein Kombinationsanzeigeinstrument 26 aufweist, mit einer Anzeigevorrichtung 8 eines Kraftfahrzeugs. Anstelle eines Bildschirms ist hier eine als LED-Kette ausgebildete Leuchtmittelkette 33 zur Ausgabe einer Fahrzeugumfeldinformation und einer Gefährdungshöhe an einen Fahrer des Kraftfahrzeugs vorgesehen. Beispielsweise können dabei Stellen von in der Leuchtmittelkette 33 leuchtenden LEDs 27 bis 32 Orte von potentiell eine Kollisionsgefahr für das Kraftfahrzeug bedeutenden Objekten im Umfeld des Kraftfahrzeugs angeben. Die LEDs 27 bis 32 können derart angesteuert sein, dass sie mit einer der Gefährdungshöhe des jeweiligen Objekts entsprechenden Lichtstärke leuchten. In diesem Ausführungsbeispiel leuchtet in der Leuchtmittelkette 33 die dritte LED 31 von rechts mit der größten Lichtstärke, da ein auf der durch eine Frontscheibe 10 des Kraftfahrzeugs erkennbaren Fahrbahn 11 stehendes, felsbrockenförmiges Objekt 24 die höchste Gefahr im Umfeld des Kraftfahrzeugs für das Kraftfahrzeug bedeutet.

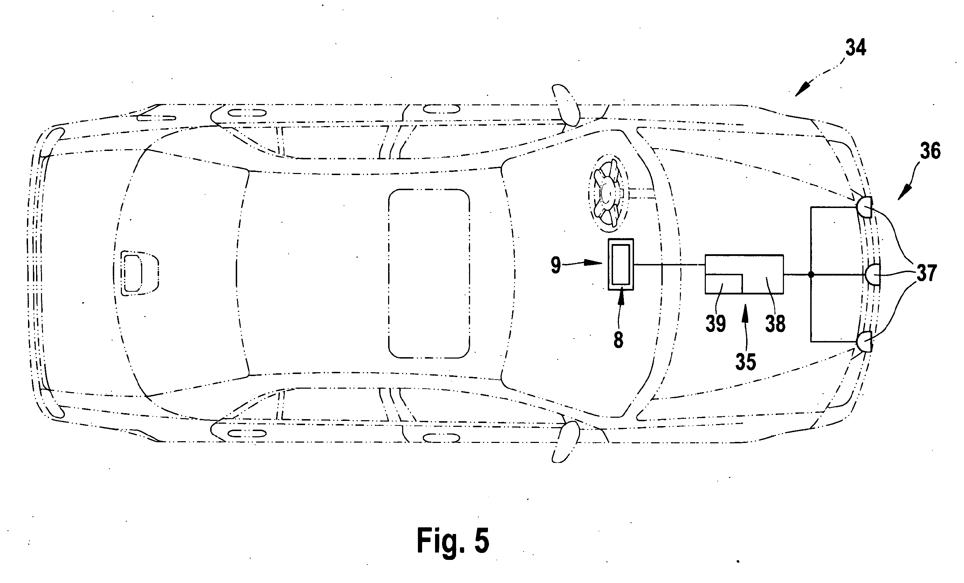

Weiterhin ist in Figur 5 ein als Kraftfahrzeug, und zwar hier als Personenkraftwagen, ausgebildetes Fahrzeug 34 mit einer einen Bestandteil eines Kollisionswarn-FAS, insbesondere eines warnenden Nachtsicht-FAS, bildenden Vorrichtung 35 zur Durchführung eines oben beschriebenen Verfahrens zum Unterstützen eines Führens des Fahrzeugs 34 gezeigt. Die Vorrichtung 35 weist fahrzeugfrontseitig eine Erfassungseinrichtung 36 mit drei Sensoren 37 zur Umfelderfassung eines vor dem Fahrzeug 34 angeordneten Teilbereichs eines Umfelds des Fahrzeugs 34 und zudem eine Ausgabeeinrichtung 9 mit einer Anzeigevorrichtung 8 zum Ausgeben einer aus der Umfelderfassung gewonnenen Fahrzeugumfeldinformation an einen Fahrer des Fahrzeugs 34 auf. Außerdem ist eine Auswerteeinrichtung 38 zum Bestimmen einer Gefährdungshöhe aus der Fahrzeugumfeldinformation vorgesehen. Die Ausgabeeinrichtung 9 ist von der Auswerteeinrichtung 38, die eine Ansteuereinheit 39 umfasst, derart ansteuerbar, dass die Fahrzeugumfeldinformation und die Gefährdungshöhe von der Ausgabeeinrichtung 9 kontinuierlich an den Fahrer ausgebbar sind.

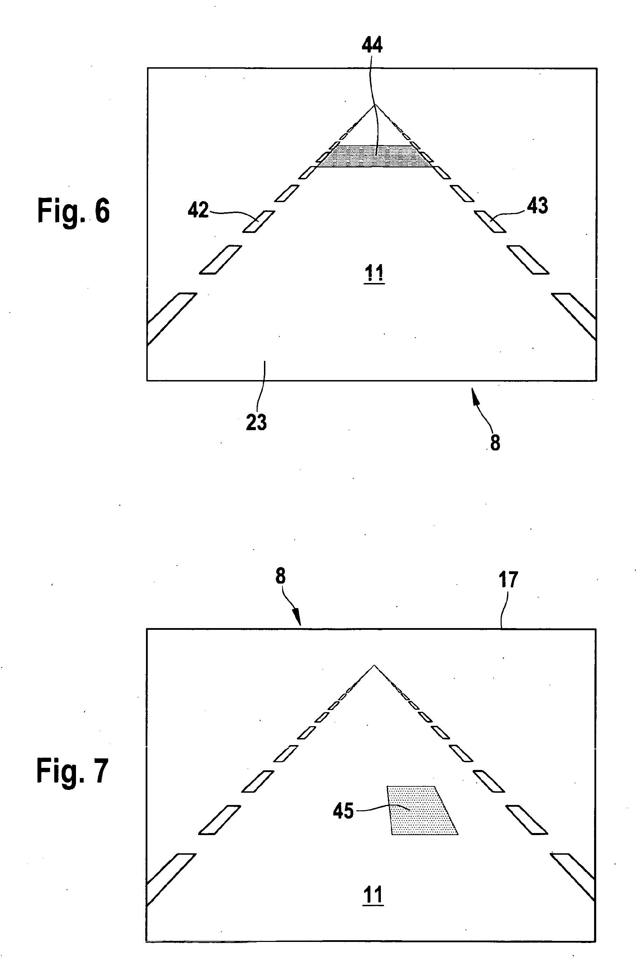

In einem anderen Ausführungsbeispiel nach Figuren 6 bis 9 weist eine Vorrichtung zum Unterstützen eines Führens eines als Kraftfahrzeug ausgebildeten Fahrzeugs, das zum Beispiel ein Kraftfahrzeug nach Figur 5 sein kann, mit Hilfe einer kontinuierlichen, analogen Fahrerwarnung eine als Anzeigevorrichtung 8 ausgebildete Ausgabeeinrichtung auf, welche Anzeigevorrichtung 8 hier als HUD ausgeführt ist, grundsätzlich aber auch ein HDD sein kann. Auf der Anzeigevorrichtung 8 wird eine vor dem Kraftfahrzeug liegende, von diesem zu befahrende Fahrbahn 11 in perspektivischer Darstellung gezeigt. Ein Fahrbahnbereich, der zu einer Fahrspur 23 des Kraftfahrzeugs gehört, ist durch jeweils eine seitliche, gestrichelte Begrenzungslinie 42, 43 markiert.

Die Fahrbahn 11 weist auf der Anzeigevorrichtung 8 zumindest ein Anzeigesegment 44 auf, das zwischen den Begrenzungslinien 42, 43 angeordnet ist. Dieses Anzeigesegment 44 zeichnet sich beispielsweise durch eine Schattierung aus, die zum Beispiel einem bestimmten Grauwert entspricht. Entsprechend einer Gefährdungshöhe, die für ein sich innerhalb eines dem Anzeigesegment44 entsprechenden Fahrbahnbereichs befindenden Objekts bezüglich des Kraftfahrzeugs bestimmt wird, ändert sich die Schattierung, insbesondere der Grauwert, des Anzeigesegments 44. Vorzugsweise hellt sich die Schattierung mit steigender Gefährdungshöhe auf.

Beispielsweise wird das Anzeigesegment 44 hellgrau dargestellt, wenn sich das Kraftfahrzeug einem in der eigenen Fahrspur 23 stehenden Objekt nähert, wohingegen das Anzeigesegment 44 zum Beispiel dunkelgrau dargestellt wird, wenn das vorgenannte Objekt sich - beispielsweise als dem Kraftfahrzeug vorausfahrendes Fahrzeug - vor dem Kraftfahrzeug in gleicher Richtung mit diesem bewegt.

Vorzugsweise kann das Anzeigesegment 44 bei einer hier gewählten perspektivischen Darstellung bei sich änderndem Abstand des Kraftfahrzeugs zu dem Objekt seine Größe und/oder Position ändern. Weiterhin ist es möglich, die laterale Auflösung eines segmentierten Bildschirms 17 der Anzeigevorrichtung 8 für geringe Abstände zwischen Objekt und Kraftfahrzeug durch Hinzufügung zusätzlicher, lateral angeordneter Anzeigesegmente zu erhöhen, wie anhand eines Anzeigesegmentes 45 in Figur 7 beispielhaft gezeigt ist. Zum Beispiel kann das Anzeigesegment 45 auch farbig dargestellt sein, wobei sich die Farbe des Anzeigesegments 45 mit der Gefährdungshöhe ändert, beispielsweise kann sich die Farbe mit steigender Gefährdungshöhe von grün über gelb nach rot ändern.

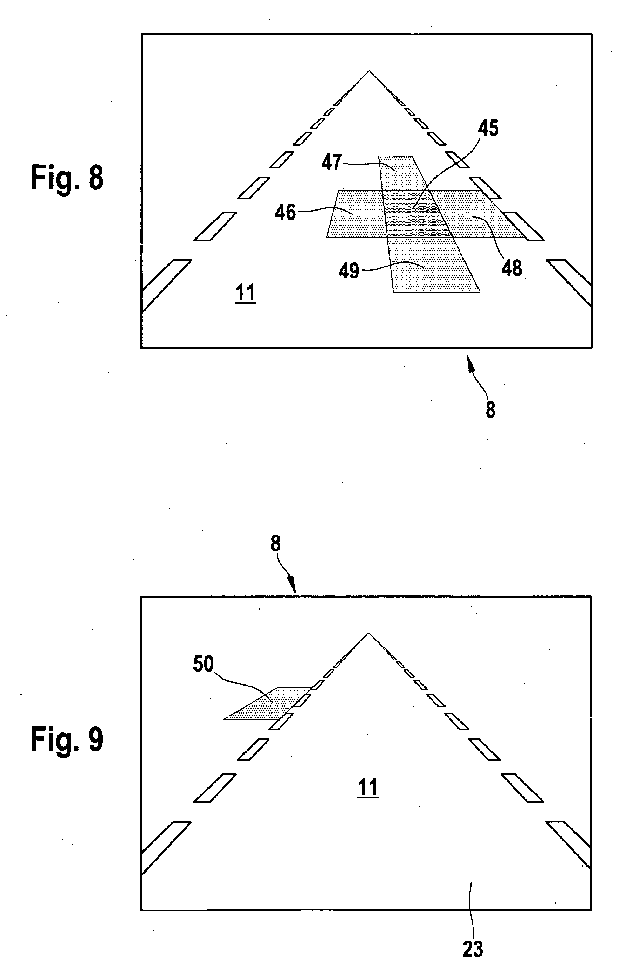

Durch ein Vorsehen einer Mehrzahl von entsprechenden Anzeigesegmenten 45 bis 49 - wie in Figur 8 gezeigt - kann eine, insbesondere laterale, Auflösung der Ausgabeeinrichtung erhöht werden, wodurch einem Fahrer des Kraftfahrzeugs gegebenenfalls eine Ortung eines das eigene Kraftfahrzeug gefährdenden Objekts im realen Fährzeugumfeld erleichtert werden kann. Vorzugsweise werden Übergänge zwischen den Anzeigesegmenten 45 bis 49 sowohl lateral als auch longitudinal fließend dargestellt, um Sprünge in der Darstellung zu vermeiden und gegebenenfalls eine Unsicherheit in einer Positionsortung des gefährdenden Objekts zum Ausdruck zu bringen. Es ist zum Beispiel denkbar, seitliche Anzeigesegmente 46, 48 derart farbig darzustellen, dass sie eine Mischung aus einem Farbwert eines mittleren Anzeigesegments 45 und einer auf der Anzeigevorrichtung 8 dargestellten Hintergrundfarbe enthalten.

Vorzugsweise können Gegenverkehr und andere, nicht in der eigenen Fahrspur 23 befindliche Randobjekte zusätzlich auf der Anzeigevorrichtung 8 dargestellt werden; dieses ist mit Hilfe eines seitlichen, hier Gegenverkehr symbolisierenden Anzeigesegmentes 50 in Figur 9 gezeigt. Auf diese Weise kann dem Fahrer außerdem ermöglicht werden, von einer Erfassungseinrichtung zur Umfelderfassung des Kraftfahrzeugs gegebenenfalls fälschlicherweise der eigenen Fahrspur 23 zugeordnete Objekte auf der Anzeigevorrichtung 8 auch dann zu verfolgen, wenn sie nicht mehr in der eigenen Fahrspur 23 erfasst werden. Somit kann das Verständnis des Fahrers von potentiellen Fehlinformationen aufgrund einer nicht korrekten Spurzuordnung erhöht werden. Vorteilhaft können solche zusätzlichen Darstellungen wie Gegenverkehr und Randobjekte durch eine statische, das heißt nicht veränderliche, Schattierung, insbesondere Grauwert, dargestellt werden, da sie keine unmittelbare Gefährdung für das Kraftfahrzeug bilden.

Eine Aussagesicherheit bezüglich der Gefährdungshöhe für das Kraftfahrzeug, die gegebenenfalls eine Wahrscheinlichkeit einer tatsächlichen Existenz des gefährdenden Objekts umfasst, kann zum Beispiel mittels einer veränderlichen Transparenz der Anzeigesegmente 44 bis 50 (siehe Figuren 6 bis 9) ausgedrückt werden, wobei die Transparenz eines jeweiligen Anzeigesegments mit steigender Aussagesicherheit vorzugsweise abnimmt, das heißt je transparenter ein Anzeigesegment dargestellt wird, um so geringer ist die Aussagesicherheit. Die Darstellung der jeweiligen Anzeigesegmente 44 bis 50, insbesondere deren Schattierung oder Grauwert und/oder Farbe und/oder Transparenz und/oder Größe und/oder Position, ändert sich grundsätzlich nicht schlagartig, sondern mit weichen, fließenden Übergängen im Sinne einer stufenlosen Darstellung.

Zur Überwachung des Fahrzustands des Fahrzeugs wird beispielsweise über einen Geschwindigkeitssensor die aktuell von dem Fahrzeug gefahrene Geschwindigkeit überwacht. Bei einer Geschwindigkeit von bis zu 130 km/h wird ein Fahrrisiko gering geschätzt und von dort beginnend bis zu Höchstgeschwindigkeit des Fahrzeugs auf beispielsweise eine mittlere Gefährdung erhöht. Zur Überwachung des Fahrzeugzustands kann beispielsweise über einen Reifendrucksensor der Reifendruck in den einzelnen Reifen oder ein Funktionieren von Lichtquellen der Beleuchtungseinrichtung, z.B. ein Funktionieren einer Bremsleuchte oder einer Lichtquelle für das Abblendlicht, durch jeweils eine zugehörige elektronische Kontrollschaltung geprüft werden. Ist der Reifendruck ein einem Reifen zu niedrig oder ist eine Lichtquelle defekt, so kann ein entsprechendes Fahrrisiko ermittelt werden. So kann beispielsweise bei einem Defekt einer Bremsleuchte ein mittleres Risiko und bei einem Defekt von zwei Bremsleuchten ein hohes Fahrrisiko ermittelt werden. Für den Reifendruck können entsprechende Grenzwerte fährzeugabhängig festgelegt werden, bei deren Unterschreiten beispielsweise ein mittleres bzw. ein hohes Risiko festgestellt wird.

Die Überwachung des Fahrzustands bzw. des Fahrzeugzustands kann weiterhin mit einer Überwachung des Fahrzeugumfelds kombiniert werden. So wird beispielsweise bei einer Geschwindigkeit von 120 km/h auf einer Autobahn bei einer Außentemperatur von mehr als 5°C und keinem Niederschlag das Fahrrisiko gering gesetzt (grüner Bereich). Wird bei einer derartigen Fahrt jedoch festgestellt, dass der Reifendruck an einem der Reifen um mehr als 0,5 bar zu niedrig ist, so erhöht sich das Fahrrisiko auf einen mittleren Bereich. Wird beispielsweise zusätzlich noch festgestellt, dass die Beleuchtung defekt ist, so würde ein hohes Risiko angezeigt. Ebenso kann ausgehend von der Situation im grünen Bereich für den Fall, dass zusätzlich ein Hindernis vor dem Fahrzeug ermittelt wird, ein hohes Risiko ermittelt werden. Durch eine zusätzliche akustische Ausgabe kann dem Fahrer dann z.B. der Hinweis gegeben werden: "Bitte Geschwindigkeit reduzieren."

Die Ausgabe der Gefährdung wird mit der Überwachung des Umfeldsystems zusammen in der Gefährdungsdarstellung dargestellt. In einer ersten Ausführungsform kann dabei stets das höchste Gefährdungspotential dargestellt werden, in einer weiteren Ausführungsform können sich die Gefährdungen, die sich aus dem Umfeld und dem Fahrzeugzustand bzw. dem Fahrzustand des Fahrzeugs ergeben, aber auch additiv berücksichtigt werden. Die Aufzeichnung ist bevorzugt statistisch derart auswertbar, dass einem Fahrer insbesondere die Häufigkeit und die Dauer von hohen Gefährdungssituationen dargestellt werden können. Vor diesem Hintergrund kann der Fahrer gegebenenfalls sein Fahrverhalten korrigieren, um Gefährdungssituationen zukünftig möglichst ausweichen zu können.

**Patentansprüche**

1. Verfahren zum Unterstützen eines Führens eines Fahrzeugs (34), insbesondere eines Kraftfahrzeugs, mit einer Erfassungseinrichtung (37) zur Umfelderfassung zumindest eines Teilbereichs eines Umfelds des Fahrzeugs (34), mit einer Ausgabeeinrichtung (9) zum Ausgeben einer aus der Umfelderfassung gewonnenen Fahrzeugumfeldinformation an einen Fahrzeugführer und mit einer Auswerteeinrichtung (38) zum Bestimmen einer Gefährdungshöhe aus der Fahrzeugumfeldinformation, wobei zumindest ein zum Bestimmen der Gefährdungshöhe vorgesehener Teil der Fahrzeugumfeldinformation und die von der Auswerteeinrichtung (38) bestimmte Gefährdungshöhe während eines Betriebs des Fahrzeugs (34) von der Ausgabeeinrichtung (9) kontinuierlich an den Fahrzeugführer ausgegeben werden, **dadurch gekennzeichnet, dass** von der Auswerteeinrichtung (38) eine Aussagesicherheit der Gefährdungshöhe bestimmt wird und dass die Aussagesicherheit während eines Betriebs des Fahrzeugs (34) von der Ausgabeeinrichtung (9) kontinuierlich an den Fahrzeugführer ausgegeben wird.

2. Verfahren nach Anspruch 1, **dadurch gekennzeichnet, dass** die Fahrzeugumfeldinformation und/oder die Gefährdungshöhe und/oder die Aussagesicherheit von der Ausgabeeinrichtung (9) visuell ausgegeben werden.

3. Verfahren nach Anspruch 2, **dadurch gekennzeichnet, dass** die Gefährdungshöhe mittels einer farbvariablen Farbdarstellung ausgegeben wird und dass eine Farbe der Farbdarstellung ein Maß für die Gefährdungshöhe ist.

4. Verfahren nach Anspruch 2 oder 3, **dadurch gekennzeichnet, dass** die Aussagesicherheit mittels einer längenvariablen Balkendarstellung ausgegeben wird und dass eine Länge der Balkendarstellung ein Maß für die Aussagesicherheit ist.

5. Verfahren nach einem der Ansprüche 2 bis 4, **dadurch gekennzeichnet, dass** die Gefährdungshöhe mittels einer blinkenden Darstellung ausgegeben wird und dass eine Blinkfrequenz und/oder einer Aufbaugeschwindigkeit der Darstellung ein Maß für die Gefährdungshöhe ist.

6. Verfahren nach einem der Ansprüche 2 bis 5, **dadurch gekennzeichnet, dass** die Aussagesicherheit mittels einer lichtstärkevariablen Darstellung ausgegeben wird und dass eine Lichtstärke der Darstellung ein Maß für die Aussagesicherheit ist.

7. Verfahren nach einem der vorhergehenden Ansprüche, **dadurch gekennzeichnet, dass** zumindest ein Teil der Fahrzeugumfeldinformation von der Ausgabeeinrichtung (9) auf einer Anzeigevorrichtung (8) an einer mit dem Ort einer möglichen Gefährdung in dem Umfeld des Fahrzeugs (34) korrespondierenden Stelle der Anzeigevorrichtung (8) ausgegeben wird.

8. Verfahren nach einem der vorhergehenden Ansprüche, **dadurch gekennzeichnet, dass** Fahrzeugsensoren hinsichtlich des Fahrzustands und/oder des Betriebszustands des Fahrzeugs ausgewertet werden, dass eine Gefährdung ausgehend von dem Fahrzeugzustand und/oder dem Fahrzustand des Fahrzeugs bewertet wird und für die Ausgabe der Gefährdungshöhe mit berücksichtigt wird.

9. Vorrichtung für ein Fahrzeug (34), insbesondere ein Kraftfahrzeug, zur Durchführung eines Verfahrens nach einem der vorhergehenden Ansprüche mit einer Erfassungseinrichtung (37) zur Umfelderfassung zumindest eines Teilbereichs eines Umfelds des Fahrzeugs, mit einer Ausgabeeinrichtung (9) zum Ausgeben einer aus der Umfelderfassung gewonnenen Fahrzeugumfeldinformation an einen Fahrzeugführer und mit einer Auswerteeinrichtung (38) zum Bestimmen einer Gefährdungshöhe aus der Fahrzeugumfeldinformation, wobei die Ausgabeeinrichtung (9) derart ansteuerbar ist, dass zumindest ein zum Bestimmen der Gefährdungshöhe vorgesehener Teil der Fahrzeugumfeldinformation und die Gefährdungshöhe von der Ausgabeeinrichtung (9) kontinuierlich an den Fahrzeugführer ausgebbar sind, **dadurch gekennzeichnet, dass** von der Auswerteeinrichtung (38) eine Aussagesicherheit der Gefährdungshöhe bestimmbar ist und dass die Ausgabeeinrichtung (9) derart ansteuerbar ist, dass die Aussagesicherheit von der Ausgabeeinrichtung (9) kontinuierlich an den Fahrzeugführer ausgebbar ist.

10. Vorrichtung nach Anspruch 9, **dadurch gekennzeichnet, dass** die Ausgabeeinrichtung (9) einen Bildschirm (17) aufweist.

11. Vorrichtung nach Anspruch 9 oder 10, **dadurch gekennzeichnet, dass** die Ausgabeeinrichtung (9) eine Leuchtmittelkette (33) aufweist.

12. Vorrichtung nach einem der Ansprüche 9 bis 11, **dadurch gekennzeichnet, dass** die Auswerteeinrichtung zur Bestimmung einer Gefährdungshöhe mit wenigstens einem Fahrzeugssensor zur Erfassung des Fahrzeugzustands und/oder des Fahrzustands des Fahrzeugs zum Bestimmen einer Gefährdungshöhe ausgehend von dem Fahrzeugzustand und/oder dem Fahrzustand des Fahrzeugs verbunden ist.

## Claims

1. Method for assisting driving of a vehicle (34), in particular of a motor vehicle, having a detection apparatus (37) for performing surroundings detection of at least part of the surroundings of the vehicle (34), having an output apparatus (9) for outputting vehicle surroundings information required from the surroundings detection process to a vehicle driver, and having an evaluation apparatus (38) for determining a level of hazard from the vehicle surroundings information, wherein at least some of the vehicle surroundings information which is provided for the determination of the level of hazard and the level of hazard which is determined by the evaluation apparatus (38) are output continuously to the vehicle driver by the output apparatus (9) during operation of the vehicle (34), **characterized in that** the evaluation apparatus (38) determines the information reliability of the level of hazard, and **in that** during operation of the vehicle (34) the information reliability is output continuously to the vehicle driver by the output apparatus (9).

2. Method according to Claim 1, **characterized in that** the vehicle surroundings information and/or the level of hazard and/or the information reliability are output visually by the output apparatus (9).

3. Method according to Claim 2, **characterized in that** the level of hazard is output by means of a colour-variable colour representation, and **in that** a colour of the colour representation is a measure of the level of hazard.

4. Method according to Claim 2 or 3, **characterized in that** the information reliability is output by means of a length-variable bar chart, and **in that** a length of the bar chart is a measure of the information reliability.

5. Method according to one of Claims 2 to 4, **characterized in that** the level of hazard is output by means of a flashing representation, and **in that** a flashing frequency and/or a build-up speed of the representation is a measure of the level of hazard.

6. Method according to one of Claims 2 to 5, **characterized in that** the information reliability is output by means of a light-strength-variable representation, and **in that** a light strength of the representation is a measure of the information reliability.

7. Method according to one of the preceding claims, **characterized in that** at least some of the vehicle surroundings information is output by the output apparatus (9) on a display apparatus (8), at a point on the display apparatus (8) which corresponds to the location of a possible hazard in the surroundings of the vehicle (34).

8. Method according to one of the preceding claims, **characterized in that** vehicle sensors are evaluated in terms of the driving state and/or the operating state of the vehicle, **in that** a hazard is evaluated on the basis of the state of the vehicle and/or the driving state of the vehicle and is also taken into account in the outputting of the level of hazard.

9. Apparatus for a vehicle (34), in particular a motor vehicle, for carrying out a method according to one of the preceding claims with a detection apparatus (37) for the surroundings detection of at least part of the surroundings of the vehicle, having an output apparatus (9) for outputting vehicle surroundings information acquired from the surroundings detection process to a vehicle driver, and having an evaluation apparatus (38) for determining a level of hazard from the vehicle surroundings information, wherein the output apparatus (9) can be actuated in such a way that at least some of the vehicle surroundings information which is provided for the determination of the level of hazard and the level of hazard can be output continuously to the vehicle driver by the output apparatus (9), **characterized in that** the evaluation apparatus (38) can determine the information reliability of the level of hazard, and **in that** the output apparatus (9) can be actuated in such a way that the information reliability can be output continuously to the vehicle driver by the output apparatus (9).

10. Apparatus according to Claim 9, **characterized in that** the output apparatus (9) has a screen (17).

11. Apparatus according to Claim 9 or 10, **characterized in that** the output apparatus (9) has a chain of lighting means (33).

12. Apparatus according to one of Claims 9 to 11, **characterized in that**, for the determination of a level of hazard, the evaluation apparatus is connected to at least one vehicle sensor for detecting the state of the vehicle and/or the driving state of the vehicle in order to determine a level of hazard on the basis of the state of the vehicle and/or the driving state of the vehicle.

**Revendications**

1. Procédé d'assistance d'une conduite d'un véhicule (34), notamment un véhicule automobile, comprenant un dispositif de détection (37) pour détecter l'environnement d'au moins une zone partielle d'un environnement du véhicule (34), comprenant un dispositif de diffusion (9) pour diffuser une information d'environnement de véhicule obtenue à partir de la détection de l'environnement à un conducteur de véhicule et comprenant un dispositif d'interprétation (38) pour déterminer un niveau de mise en danger à partir de l'information d'environnement de véhicule, au moins une partie de l'information d'environnement de véhicule prévue pour déterminer le niveau de mise en danger et le niveau de mise en danger déterminé par le dispositif d'interprétation (38) pendant un fonctionnement du véhicule (34) étant diffusés continuellement par le dispositif de diffusion (9) à l'attention du conducteur du véhicule, **caractérisé en ce qu'**une certitude d'affirmation du niveau de danger est déterminée par le dispositif d'interprétation (38) et que la certitude d'affirmation est diffusée continuellement à l'attention du conducteur du véhicule par le dispositif de diffusion (9) pendant un fonctionnement du véhicule (34).

2. Procédé selon la revendication 1, **caractérisé en ce que** l'information d'environnement de véhicule et/ou le niveau de mise en danger et/ou la certitude d'affirmation sont diffusés visuellement par le dispositif de diffusion (9).

3. Procédé selon la revendication 2, **caractérisé en ce que** le niveau de mise en danger est diffusé au moyen d'une représentation colorée à couleur variable et qu'une couleur de la représentation colorée est une indication du niveau de mise en danger.

4. Procédé selon la revendication 2 ou 3, **caractérisé en ce que** la certitude d'affirmation est diffusée au moyen d'une représentation à barres de longueur variable et qu'une longueur de la représentation à barres est une indication du niveau de mise en danger.

5. Procédé selon l'une des revendications 2 à 4, **caractérisé en ce que** le niveau de mise en danger est diffusé au moyen d'une représentation clignotante et qu'une fréquence de clignotement et/ou une vitesse de diffusion de la représentation est une indication du niveau de mise en danger.

6. Procédé selon l'une des revendications 2 à 5, **caractérisé en ce que** la certitude d'affirmation est diffusée au moyen d'une représentation à intensité lumineuse variable et qu'une intensité lumineuse de la représentation est une indication du niveau de mise en danger.

7. Procédé selon l'une des revendications précédentes, **caractérisé en ce qu'**au moins une partie de l'information d'environnement du véhicule est diffusée par le dispositif de diffusion (9) sur un dispositif indicateur (8) en un point du dispositif indicateur (8) correspondant à l'endroit d'une mise en danger possible dans l'environnement du véhicule (34).

8. Procédé selon l'une des revendications précédentes, **caractérisé en ce que** les capteurs de véhicule sont interprétés pour connaître l'état de conduite et/ou l'état de fonctionnement du véhicule, qu'une mise en danger est évaluée à partir de l'état de conduite et/ou de l'état de fonctionnement du véhicule et également prise en compte pour la diffusion du niveau de mise en danger.

9. Dispositif pour un véhicule (34), notamment un véhicule automobile, pour mettre en oeuvre un procédé selon l'une des revendications précédentes, comprenant un dispositif de détection (37) pour détecter l'environnement d'au moins une zone partielle d'un environnement du véhicule, comprenant un dispositif de diffusion (9) pour diffuser une information d'environnement de véhicule obtenue à partir de la détection de l'environnement à un conducteur de véhicule et comprenant un dispositif d'interprétation (38) pour déterminer un niveau de mise en danger à partir de l'information d'environnement de véhicule, le dispositif de diffusion (9) pouvant être commandé de telle sorte qu'au moins une partie de l'information d'environnement de véhicule prévue pour déterminer le niveau de mise en danger et le niveau de mise en danger peuvent être diffusés continuellement par le dispositif de diffusion (9) à l'attention du conducteur du véhicule, **caractérisé en ce qu'**une certitude d'affirmation du niveau de danger peut être déterminée par le dispositif d'interprétation (38) et que le dispositif de diffusion (9) peut être commandé de telle sorte que la certitude d'affirmation peut être diffusée continuellement à l'attention du conducteur du véhicule par le dispositif de diffusion (9).

10. Dispositif selon la revendication 9, **caractérisé en ce que** le dispositif de diffusion (9) présente un écran (17).

11. Dispositif selon la revendication 9 ou 10, **caractérisé en ce que** le dispositif de diffusion (9) présente une chaîne de moyens lumineux (33).

12. Dispositif selon l'une des revendications 9 à 11, **caractérisé en ce que** le dispositif d'interprétation, pour déterminer un niveau de mise en danger, est relié avec au moins un capteur de véhicule pour détecter l'état du véhicule et/ou l'état de conduite du véhicule afin de déterminer le niveau de mise en danger à partir de l'état du véhicule et/ou l'état de conduite du véhicule.

**Fig. 1**

**Fig. 2**

**Fig. 3**

17  40  25  41  8  7

18  19

**Fig. 4**

24  10

11

27  28  29  30  31  32  33

8  26  7

**Fig. 5**

EP 1 997 092 B1

Fig. 6

Fig. 7

**Fig. 8**

**Fig. 9**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10247563 A1
- DE 102004009924 A1
- EP 1557784 A1
- FR 2864311 A1
- US 20050273263 A1
- DE 19839198 A1